# EUROPÄISCHE PATENTSCHRIFT

(11) **EP 1 982 404 B1**
(45) Veröffentlichungstag und Bekanntmachung des Hinweises auf die Patenterteilung: **13.03.2013**
(21) Anmeldenummer: 07702953.6
(22) Anmeldetag: 23.01.2007
(51) Int. Cl.: H02K 7/10, H02K 9/19, H02K 16/00, B65G 23/08

(54) **ANTRIEBSTROMMEL EINES GURTBANDFÖRDERERS**
DRIVE DRUM FOR A BELT CONVEYOR
TAMBOUR D'ENTRAÎNEMENT D'UN TRANSPORTEUR À COURROIE

(30) Priorität: 04.02.2006 DE 102006005158
(43) Veröffentlichungstag der Anmeldung: 22.10.2008
(73) Patentinhaber: ABB AG, 68309 Mannheim (DE)
(72) Erfinder: SIMKE, Dietmar, 03050 Cottbus (DE); RATHMANN, Boris, 03046 Cottbus (DE); BUDE, Rüdiger, 03050 Cottbus (DE); LILIENTHAL, Gilbert, 03052 Cottbus (DE)
(74) Vertreter: Partner, Lothar
(86) Internationale Anmeldenummer: PCT/EP2007/000543
(87) Internationale Veröffentlichungsnummer: WO 2007/087997

(56) Entgegenhaltungen:
- EP-A- 1 475 340
- EP-A2- 0 623 988
- WO-A-01/37398
- DE-C1- 3 635 297
- GB-A- 904 258
- GB-A- 2 401 730
- US-A- 1 820 985
- US-A- 4 728 840

## Beschreibung

Die Erfindung bezieht sich auf eine Antriebstrommel eines Gurtbandförderers gemäß dem Oberbegriff des Anspruchs 1. Gurtbandförderer werden industriell beim Transport von Massengütern eingesetzt, beispielsweise zum Befördern von Erzen, Kohle und Erde.

Aus der DE 41 34 050 C2 ist eine Antriebstrommel für Gurtbandförderer mit innerhalb der Trommel liegendem Motor und Getriebe bekannt, wobei die Antriebstrommel zur lösbaren Aufnahme von innerhalb der Trommel gelagertem Motor und Getriebe beidseitig in die Trommel hineinragende, feststehende Hohlwellenabschnitte aufweist. Die Lager sind zwischen den eine unterschiedliche Länge aufweisenden Hohlwellenabschnitten und der Trommel angeordnet. Motor und Getriebe sind in dem längeren, endseitig mit einem Tragelement versehenen Hohlwellenabschnitt befestigt. Die vorgeschlagene Konfiguration erlaubt es, ohne Entlastung der Trommel durch Zugkräfte des Gurtes und ohne Ablassen von Öl ein schnelles Austauschen von Motor und Getriebe vorzunehmen. Eine weitere Antriebstrommel ist aus GB 904,258 bekannt. Diese weist eine Kühlvorrichtung für den Motor auf.

Der Erfindung liegt die Aufgabe zugrunde, eine für unterschiedliche Leistungsanforderungen kostengünstig herstellbare Antriebstrommel eines Gurtbandförderers anzugeben.

Die Aufgabe wird hinsichtlich der Antriebstrommel in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass der vorgeschlagene getriebelose Antrieb für Gurtbandförderer sehr robust aufgebaut und kostengünstig in unterschiedlichen Leistungsklassen fertigbar ist. Insbesondere ist es von großem Vorteil, dass je nach geforderter Leistung der Antriebstrommel eine unterschiedliche Anzahl von jeweils gleichartig ausgeführten Motoren in ein und denselben Trommelmantel eingesetzt werden kann.

Weitere Vorteile sind aus der nachstehenden Beschreibung ersichtlich.

Vorteilhafte Ausgestaltungen der Erfindung sind in den Unteransprüchen gekennzeichnet.

Die Zeichnungen zeigen:
- Fig.1: eine erste nicht erfindungsgemäße Ausführungsform einer Antriebstrommel eines Gurtbandförderers im Längsschnitt,
- Fig. 2: einen Querschnitt durch eine Antriebstrommel der ersten Ausführungsform,
- Fig. 3: eine zweite nicht erfindungsgemäße Ausführungsform einer Antriebstrommel eines Gurtbandförderers im Längsschnitt,
- Fig. 4: eine dritte nicht erfindungsgemäße Ausführungsform einer Antriebstrommel eines Gurtbandförderers im Längsschnitt,
- Fig. 5: eine vierte nicht erfindungsgemäße Ausführungsform einer Antriebstrommel eines Gurtbandförderers im Längsschnitt,
- Fig. 6: eine fünfte nicht erfindungsgemäße Ausführungsform einer Antriebstrommel eines Gurtbandförderers im Längsschnitt,
- Fig. 7: eine sechste nicht erfindungsgemäße Ausführungsform einer Antriebstrommel eines Gurtbandförderers im Längsschnitt,
- Fig. 8: eine nicht erfindungsgemäße Möglichkeit des elektrischen Anschlusses sowie des Kühlmittelanschlusses einer Wicklung,
- Fig. 9: eine siebte erfindungsgemäße Ausführungsform einer Antriebstrommel eines Gurtbandförderers im Längsschnitt,
- Fig. 10: einen Querschnitt durch eine Antriebstrommel der siebten Ausführungsform,
- Fig. 11: ein erstes mögliches Schema der elektrischen Anschlusstechnik sowie der Kühlmittel-Anschlusstechnik der siebten Ausführungsform,
- Fig. 12, 13: ein zweites mögliches Schema der elektrischen Anschlusstechnik sowie der Kühlmittel-Anschlusstechnik der siebten Ausführungsform.

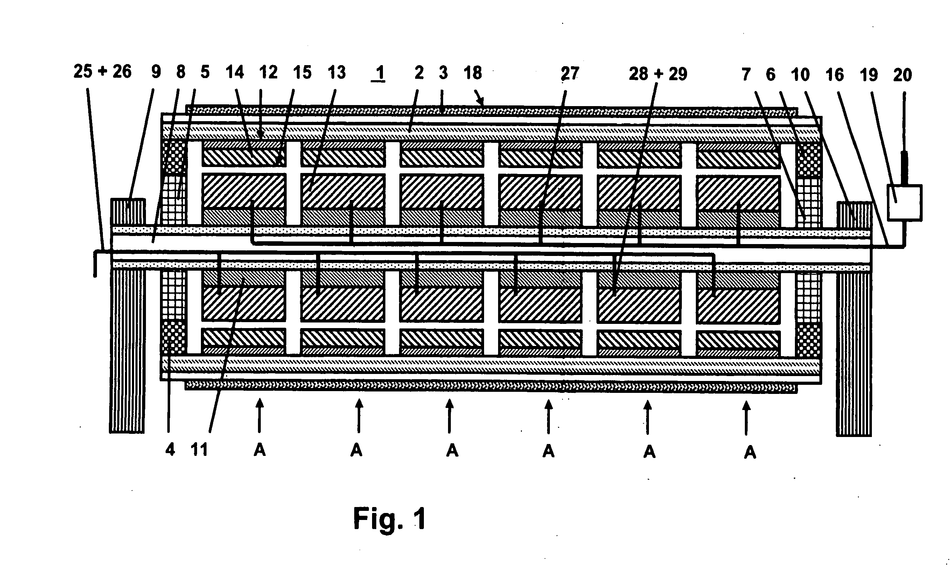

In Fig. 1 ist eine erste nicht erfindungsgemäße Ausführungsform einer Antriebstrommel eines Gurtbandförderers im Längsschnitt dargestellt. Die Antriebstrommel 1 weist einen hohlzylinderförmigen Trommelmantel 2 auf, welcher mit einem Trommelbelag 3 (beispielsweise aufvulkanisierte Gummischicht) beschichtet ist. Ein Fördergurt 18 wird von der Antriebstrommel 1 angetrieben. Die beiden stirnseitigen Böden 4 bzw. 6 der Antriebstrommel 1 sind mit zentrisch angeordneten Lagern 5 bzw. 7 versehen, welche zur Montage einer feststehenden Trommelachse 8 dienen. Die beiden über die Böden 4, 6 ragenden Enden der Trommelachse 8 sind in Achsbefestigungen 9, 10 montiert.

Innerhalb des hohlzylinderförmigen Trommelmantels 2 sind beispielsweise sechs Motoren A angeordnet. Bei den Motoren A handelt es sich vorzugsweise um Synchronmotoren mit Permanenterregung und mit Kühlvorrichtung. Vorteilhaft sind keine Bauteile auf sich drehenden Teilen angeordnet, welche Zuleitungen für die Energieversorgung oder die Kühlung erfordern. Jeder Motor A
● ist über einen achsseitigen Motorrahmen 11 an der Trommelachse 8 befestigt,
● ist über einen mantelseitigen Motorrahmen 12 am Trommelmantel 2 befestigt,
● weist eine am achsseitigen Motorrahmen 11 befestigte Wicklung 13 auf,
● weist am mantelseitigen Motorrahmen 12 befestigte Permanentmagnete 14 als Motorkomponente zur Felderzeugung auf,
● weist einen Luftspalt 15 zwischen den Permanentmagneten 14 und der Wicklung 13 auf,
● weist einen Wicklungsanschluss 27 zur Energiezufuhr auf,
● weist eine Wicklungs-Kühlmittelzuleitung 28 und eine Wicklungs-Kühlmittelableitung 29 auf.

Die Wicklungsanschlüsse 27 sind mit mindestens einer Anschlussleitung 16 zur Energiezufuhr (Kabel) verbunden. Diese mindestens eine Anschlussleitung 16 kann z. B. innerhalb der Trommelachse 8 verlaufen. Um die Motoren mit variabler Drehzahl betreiben zu können, ist ein Umrichter 19, vorzugsweise ein Frequenzumrichter, vorgesehen, welcher eingangsseitig mit einer Energieversorgung (Netz) 20 verbunden ist und ausgangsseitig die mindestens eine Anschlussleitung 16 versorgt.

Die Wicklungs-Kühlmittelzuleitungen 28 sind mit einer Kühlmittelzuleitung 25 verbunden, welche z. B. innerhalb der Trommelachse 8 geführt ist. In gleicher Weise sind die Wicklungs-Kühlmittelableitungen 29 mit einer Kühlmittelableitung 26 verbunden, welche z. B. innerhalb der Trommelachse 8 geführt ist. Je nach Art des Kühlmittels sind Kühlmittelzuleitung 25 und Kühlmittelableitung 26 gegebenenfalls mit weiteren Baukomponenten verbunden. Bei Verwendung einer Flüssigkeit (beispielsweise Wasser oder Öl) als Kühlmittel dienen als weitere Baukomponenten ein Rückkühler und eine Kühlmittelpumpe zum Kühlmitteltransport. Bei Verwendung eines Gases (beispielsweise Luft) als Kühlmittel dient als weitere Baukomponente ein Lüfter zum Kühlmitteltransport.

Die vorstehend erwähnte Befestigung der Motoren zwischen achsseitigem Motorrahmen 11 und Trommelachse 8 sowie zwischen mantelseitigem Motorrahmen 12 und Trommel 2 erfolgt vorzugsweise über technologisch übliche formschlüssige Verbindungen, beispielsweise Passfedern oder Verzahnungen, wobei seitliche Arretierungen gegen seitliches Verrutschen der Motoren zur Anwendung kommen. Von Wichtigkeit dabei ist, dass der Mantel der Trommel 2 im Hinblick auf den hohen auftretenden Gurtzug und das hohe Gurtgewicht (Tangentialkräfte) genügend stabil ist, d. h. dass die resultierende Durchbiegung im gewünschten Toleranzbereich liegt.

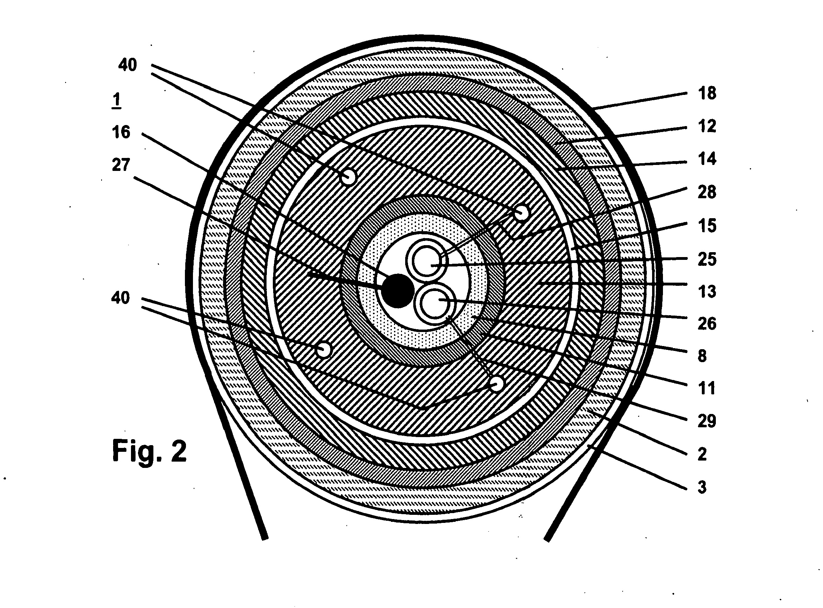

In Fig. 2 ist ein Querschnitt durch eine Antriebstrommel 1 der ersten Ausführungsform dargestellt, wobei die Trommelachse 8 als Hohlachse ausgeführt ist. Innerhalb der hohlen Trommelachse 8 verlaufen die mindestens eine Anschlussleitung 16 zur Energiezufuhr, die Kühlmittelzuleitung 25 und die Kühlmittelableitung 26. Der Motor wird durch den achsseitigen Motorrahmen 11, die Wicklung 13, die Permanentmagnete 14 und den mantelseitigen Motorrahmen 12 gebildet, wobei der Luftspalt 15 zwischen Wicklung 13 und den Permanentmagneten 14 erkennbar ist. Der elektrische Wicklungsanschluss 27, die mit der Kühlmittelzuleitung 25 verbundene Wicklungs-Kühlmittelzuleitung 28 und die mit der Kühlmittelableitung 26 verbundene Wicklungs-Kühlmittelableitung 29 sind skizziert, desgleichen der Trommelmantel 2 mit Trommelbelag 3 und der angetriebene, die Antriebstrommel umschlingende Fördergurt 18. Für die Führung des Kühlmittels ist z. B. eine mit Kühlmittelzuleitung 25 und Kühlmittelableitung 26 verbundene Rohrleitung 40 innerhalb der Wicklung 13 eines Motors A verlegt.

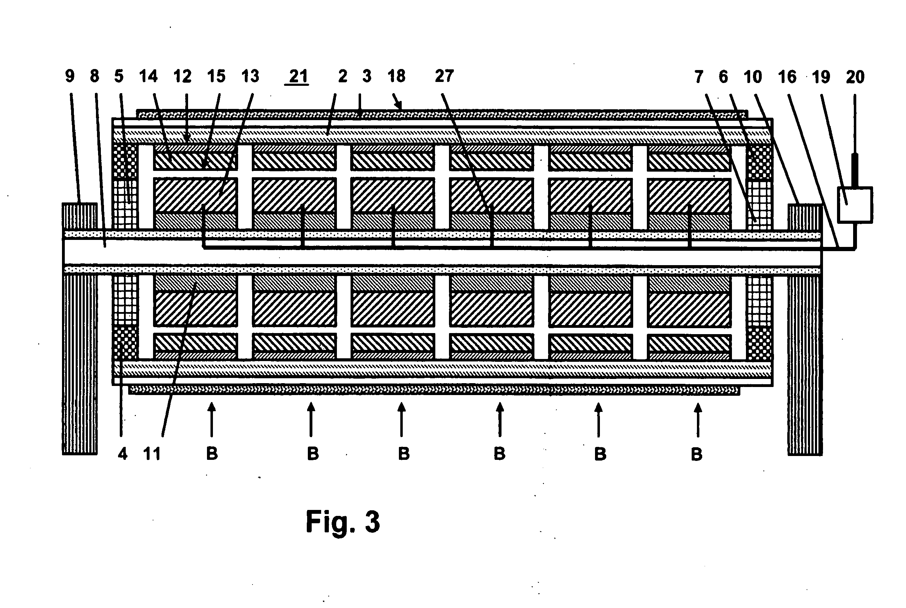

In Fig. 3 ist eine zweite nicht erfindungsgemäße Ausführungsform einer Antriebstrommel eines Gurtbandförderers im Längsschnitt dargestellt. Bei dieser zweiten Ausführungsform besteht ein reduzierter Leistungsbedarf gegenüber der ersten Ausführungsform. Der Unterschied zu der ersten Ausführungsform gemäß den Fig. 1 und 2 besteht darin, dass in einer Antriebstrommel 21 sechs Motoren B ohne Kühlvorrichtung eingesetzt sind. Demgemäß entfallen Kühlmittelzuleitung 25, Kühlmittelableitung 26, Wicklungs-Kühlmittelzuleitungen 28, Wicklungs-Kühlmittelableitungen 29 und die Rohrleitungen 40.

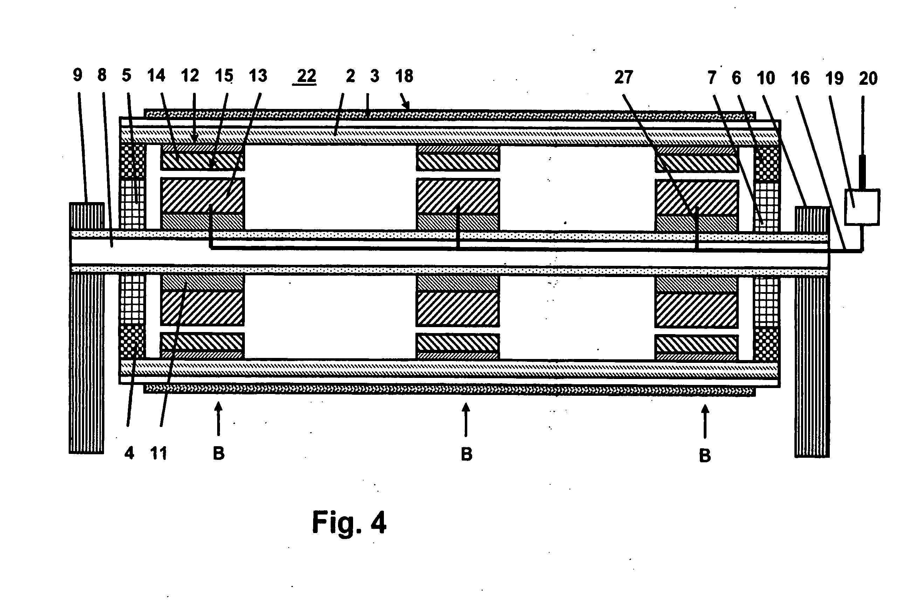

In Fig. 4 ist eine dritte nicht erfindungsgemäße Ausführungsform einer Antriebstrommel eines Gurtbandförderers im Längsschnitt dargestellt. Bei dieser dritten Ausführungsform besteht ein reduzierter Leistungsbedarf gegenüber der zweiten Ausführungsform. Der Unterschied zu der zweiten Ausführungsform gemäß Fig. 3 besteht darin, dass in einer Antriebstrommel 22 lediglich drei Motoren B ohne Kühlvorrichtung eingesetzt sind. Die Anordnung der Motoren B innerhalb der Trommel 2 erfolgt vorzugsweise in symmetrischer Weise an den Rändern und in der Mitte der Trommel.

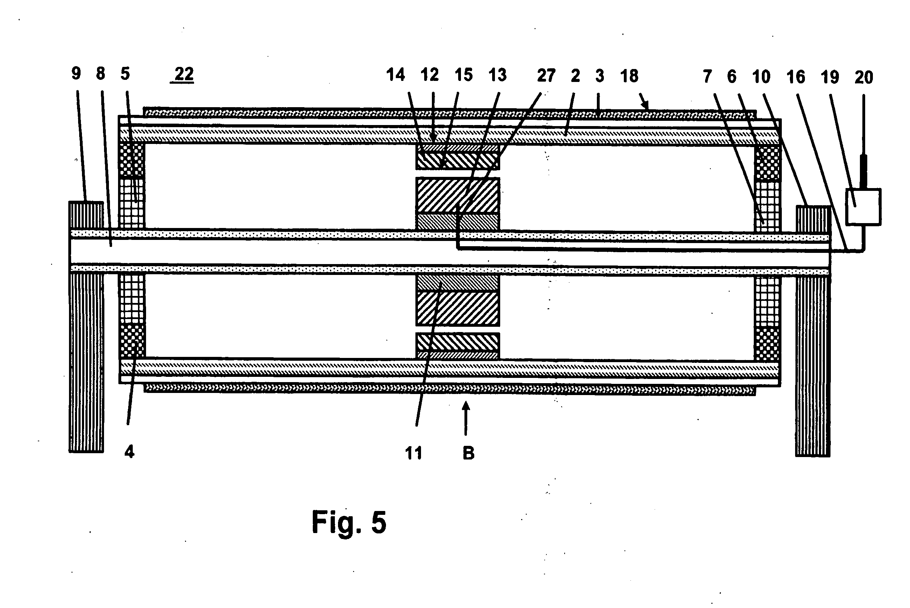

In Fig. 5 ist eine vierte nicht erfindungsgemäße Ausführungsform einer Antriebstrommel eines Gurtbandförderers im Längsschnitt dargestellt. Bei dieser vierten Ausführungsform besteht ein reduzierter Leistungsbedarf gegenüber der dritten Ausführungsform. Der Unterschied zu der dritten Ausführungsform gemäß Fig. 3 besteht darin, dass in einer Antriebstrommel 22 lediglich ein Motor B ohne Kühlvorrichtung eingesetzt ist. Die Anordnung des Motors B innerhalb des Trommelmantels 2 erfolgt vorzugsweise in symmetrischer Weise in der Mitte der Trommel.

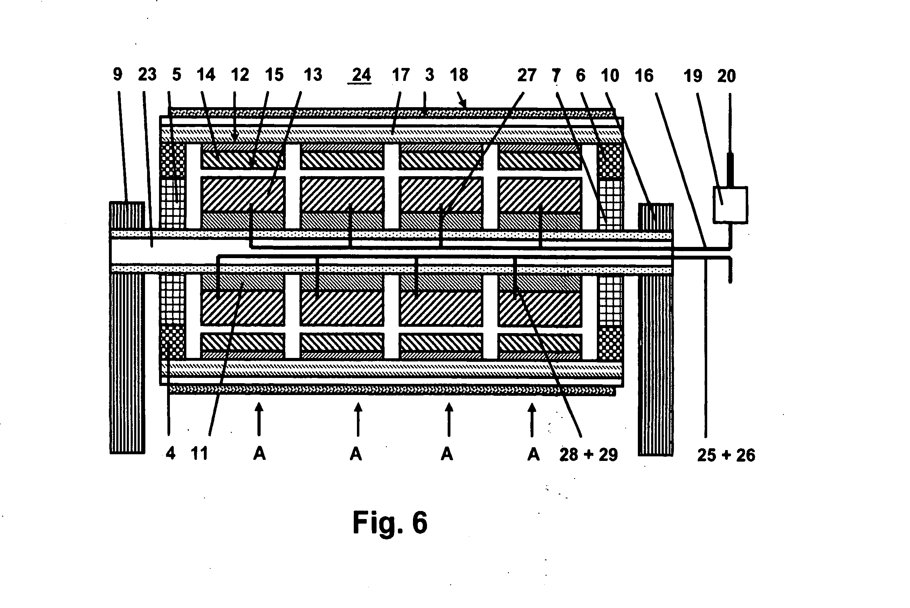

In Fig. 6 ist eine fünfte nicht erfindungsgemäße Ausführungsform einer Antriebstrommel eines Gurtbandförderers im Längsschnitt dargesteilt. Bei dieser fünften Ausführungsform wird gegenüberden ersten vier Ausführungsformen eine kürzere Antriebstrommel 24 mit kürzerem Trommelmantel 17 und kürzerer Trommelachse 23 eingesetzt. In der Antriebstrommel 24 sind vier Motoren A mit Kühlvorrichtung eingesetzt.

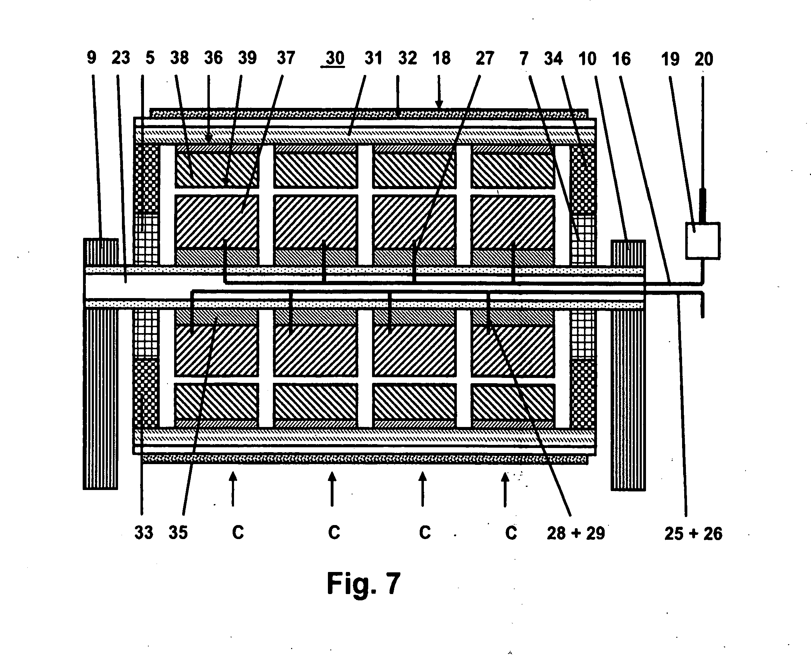

In Fig. 7 ist eine sechste nicht erfindungsgemäße Ausführungsform einer Antriebstrommel eines Gurtbandförderers im Längsschnitt dargestellt. Bei dieser sechsten Ausführungsform wird gegenüber den ersten fünf Ausführungsformen eine Antriebstrommel 30 mit im Durchmesser vergrößertem Trommelmantel 31 verwendet, in welche vier. Motoren C mit entsprechend vergrößertem Durchmesser eingesetzt sind, welche jeweils einen achsseitigen Motorrahmen 35, einen mantelseitigen Motorrahmen 36, eine Wicklung 37 und Permanentmagnete 38 aufweisen. Der Luftspalt 39 ist zu erkennen. Gezeigt sind Motoren mit Kühlvorrichtung, selbstverständlich kann es sich dabei auch um Motoren ohne Kühlvorrichtung handeln. Der Trommelmantel 31 ist beidseitig mit stirnseitigen Böden 33, 34 verschlossen und mit einem Trommelbelag 32 versehen. Die Länge des Trommelmantels 31 ist gleich der Länge des Trommelmantels 17 gemäß der fünften Ausführungsform, so dass vorteilhaft die auch bei der fünften Ausführungsform eingesetzte Trommelachse 23 verwendet werden kann.

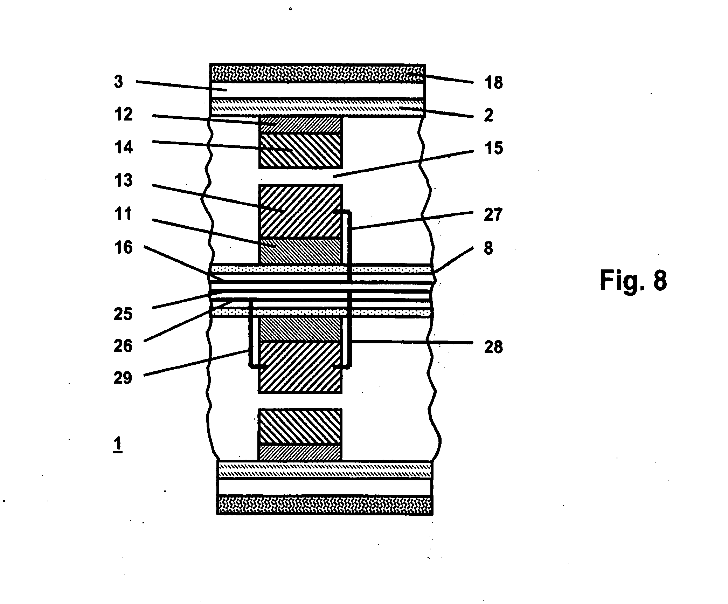

In Fig. 8 ist eine bevorzugte Möglichkeit des elektrischen Anschlusses sowie des Kühlmittelanschlusses einer Wicklung als schematische Detailskizze dargestellt. Es ist beispielhaft lediglich ein innerhalb der Antriebstrommel 1 (mit Trommelmantel 2, Trommelbelag 3, Trommelachse 8) angeordneter Motor mit achsseitigem Motorrahmen 11, mantelseitigem Motorrahmen 12, Wicklung 13, Permanentmagneten 14, Luftspalt 15 gezeigt. Vorzugsweise sind die Leitungen zu/von den Motoren in die Zwischenräume zwischen den Motoren verlegt:
● Wicklungsanschluss 27 zwischen Wicklung 13 und Anschlussleitung 16,
● Wicklungs-Kühlmittelzuleitung 28 zwischen Wicklung 13 und Kühlmittelzuleitung 25,
● Wicklungs-kühlmittelableitung 29 zwischen Wicklung 13 und Kühlmittelableitung 26.

Diese Verlagerung der Leitungen in die Zwischenräume zwischen den Motoren führt vorteilhaft zu einer vereinfachten Konstruktion und vereinfachter Montage.

Wie aus den vorstehenden Erläuterungen hervorgeht, wird ein nicht "beanspruchtes, "Antriebstrommel-Baukastensystem", bestehend aus unterschiedlichen Modulen, wie Standard-Trommeln unterschiedlicher Länge und unterschiedlichen Durchmessers, Standard-Trommelachsen unterschiedlicher Länge und/oder Durchmessers und Standard-Motoren unterschiedlichen Durchmessers und unterschiedlicher Kühlung gebildet, welche für den konkret vorliegenden Anwendungsfall entsprechend zusammenfügbar sind. Da für einen konkreten speziellen Anwendungsfall keinerlei spezielle Baukomponenten gefertigt werden müssen, sondern auf in relativ hoher Stückzahl produzierbare Standard-Komponenten (Moduln) zurückgegriffen werden kann, reduzieren sich die Gesamt-Herstellkosten pro Antriebstrommel und Gurtbandförderer. Die Auswahl der Baukomponenten erfolgt anwendungsspezifisch im Hinblick auf den erforderlichen Leistungsbedarf, das erforderliche Drehmoment, die erforderliche Drehzahl, die vorgegebene Breite des Fördergurts und die gewünschte Kühlart (Gas als Kühlmittel, Flüssigkeit als Kühlmittel, ohne Gas/Flüssigkeitskühlung).

Selbst wenn lediglich ein einziger Trommelmantel und eine einzige Trommelachse zugrunde gelegt werden, ergibt sich ein "Antriebstrommel-Baukastensystem", denn abhängig von der Anzahl der in diesen Trommelmantel eingesetzten Motoren kann ein breites Leistungsspektrum abgedeckt werden.

Durch den Einsatz von mehreren Motoren an Stelle eines einzigen Motors ergeben sich folgende Vorteile:
● der gleiche Motor kann für unterschiedliche Längen der Trommeln eingesetzt werden (es ändert sich lediglich die Anzahl der eingesetzten Motoren), was zu Kostenvorteilen führt,
● der Luftspalt kann über die gesamte Länge der Trommel einfacher konstant gehalten werden, als der Luftspalt eines einzigen Motors großer Länge,
● der Einbau mehrerer kleiner Motoren in die Trommel ist einfacher als der Einbau eines einzigen Motors großer Länge,
● Standardisierung der Komponenten in einfacher Weise möglich.

Zu den vorstehenden Ausführungen ist nachzutragen, dass es keinesfalls erforderlich ist, dass die feststehenden Baukomponenten, wie beispielsweise Trommelachse 8, 23 und achsseitiger Motorrahmen 11, eine zylindrische Form haben. Das "erste" Bauelement, das zwangsweise runden Querschnitt haben muss, ist die luftspaltseitige Oberfläche des Rotors des Motors sowie die Lager 5, 7.

Erfindugsgemäß werden die mindestens eine Anschlussleitung 16 und die Kühlmittelzuleitung 25 und die Kühlmittelableitung 26 an der Trommelachse 8, 23 z. B. in Nuten geführt, was die Montage und Demontage der Motoren vorteilhaft vereinfacht.

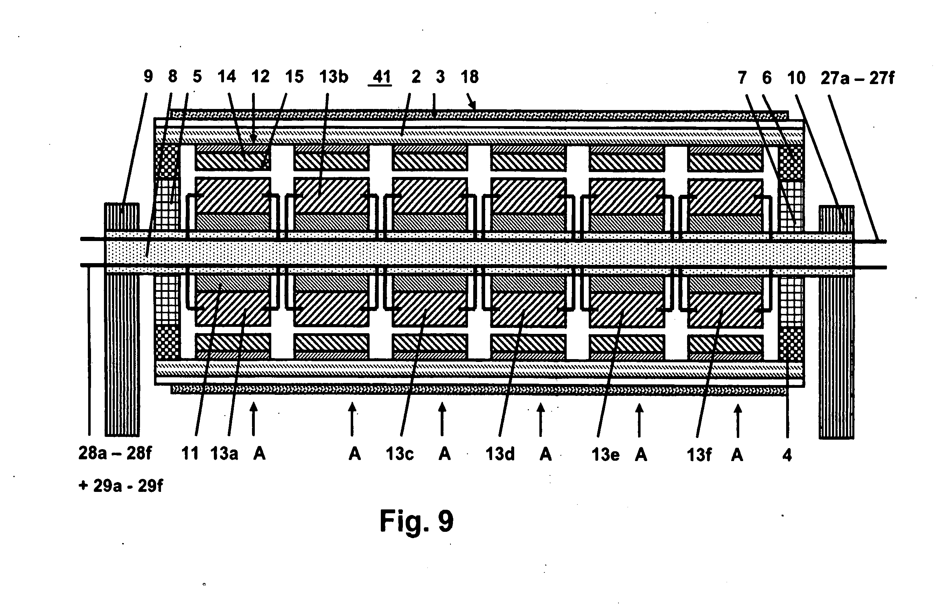

In den Fig. 9 bis 13 ist hierzu eine siebte Ausführungsform einer Antriebstrommel eines Gurtbandförderers im Längsschnitt und im Querschnitt dargestellt. Im Unterschied zur ersten Ausführungsform gemäß Fig. 1 ist die Trommelachse 8 massiv ausgebildet und weist mehrere von der Mantelfläche zugängliche Längsnuten 42 auf, in welchen die (elektrischen) Wicklungsanschlüsse 27 respektive 27a - 27f und/oder elektrische Verbindungsleitungen 47, die Wicklungs-Kühlmittelzuleitungen 28 respektive 28a - 28f und die Wicklungs-Kühlmittelableitungen 29 respektive 29a - 29f für die Wicklungen 13a - 13f und/oder Kühlmittel-Verbindungsleitungen 46 geführt sind. Wie bereits in Fig. 8 angeführt, sind die Leitungen unmittelbar zu/von den Motoren jeweils in die Zwischenräume zwischen den Motoren A respektive zwischen Motor A und stirnseitigem Boden Lager verlegt.

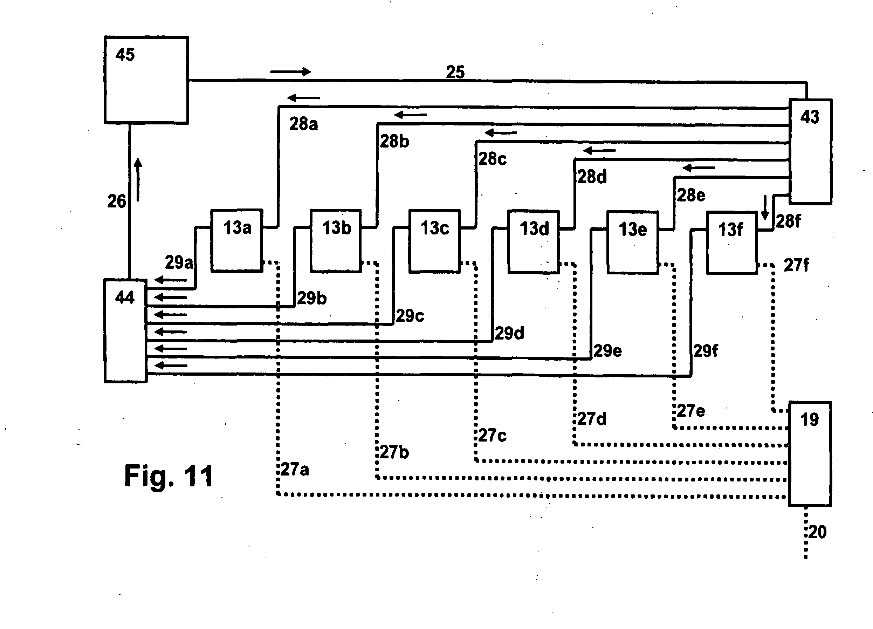

Fig. 11 zeigt ein erstes mögliches Schema der elektrischen Anschlusstechnik sowie der Kühlmittel-Anschlusstechnik für die siebte Ausführungsform. Um jegliche Abzweige betreffend die Kühlmittelzufuhr und -abfuhr innerhalb der Antriebstrommel 41 zu vermeiden, sind ein Kühlmittelverteiler 43 und ein Kühlmittelsammler 44 außerhalb der Antriebstrommel 41 vorgesehen und mit einem Rückkühler 45 verbunden. Es ergibt sich folgender Kühlmittelkreislauf für das Ausführungsbeispiel gemäß Fig. 9: Rückkühler 45 - Kühlmittelzuleitung 25 (außerhalb der Antriebstrommel) - Kühlmittelverteiler 43 - sechs getrennte (parallele) Wicklungs-Kühlmittelzuleitungen 28a bis 28f zu den sechs Wicklungen 13a bis 13f (innerhalb der Antriebstrommel) - Kühlmittelleitungen innerhalb dieser Wicklungen - sechs getrennte (parallele) Wicklungs-Kühlmittelableitungen 29a bis 29f (innerhalb der Antriebstrommel) - Kühlmittelsammler 44 - Kühlmittelableitung 26 (außerhalb der Antriebstrommel) - Rückkühler 45.

Des Weiteren werden jegliche Abzweige betreffend die elektrischen Anschlüsse innerhalb der Antriebstrommel 41 vermieden. Der eingangsseitig an die Energieversorgung 20 angeschlossene Umrichter 19 ist über getrennte Wicklungsanschlüsse 27a bis 27f mit den einzelnen Wicklungen 13a bis 13f verbunden. Die Wicklungsanschlüsse 27a bis 27f verlaufen dabei wie die Wicklungs-Kühlmittelzuleitungen 28a bis 28f und die Wicklungs-Kühlmittelableitungen 29a - 29f innerhalb der Nuten 42.

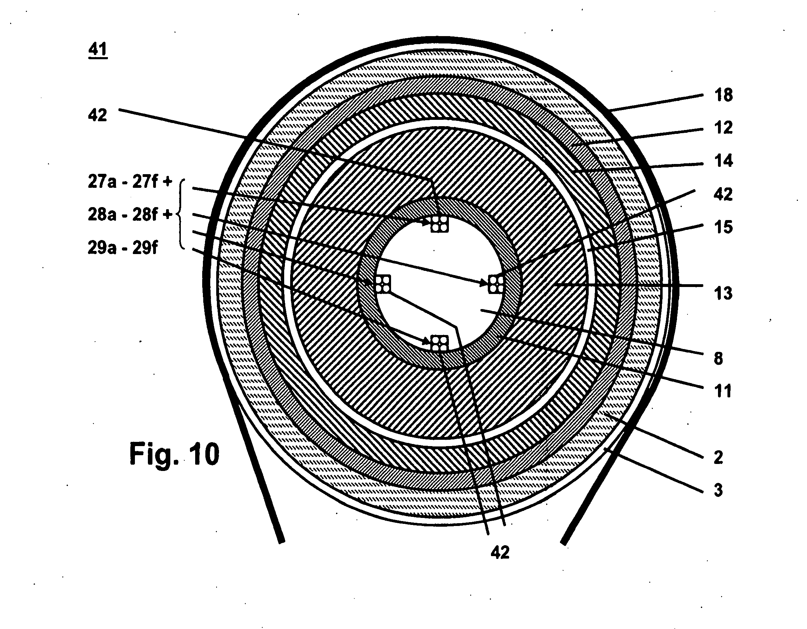

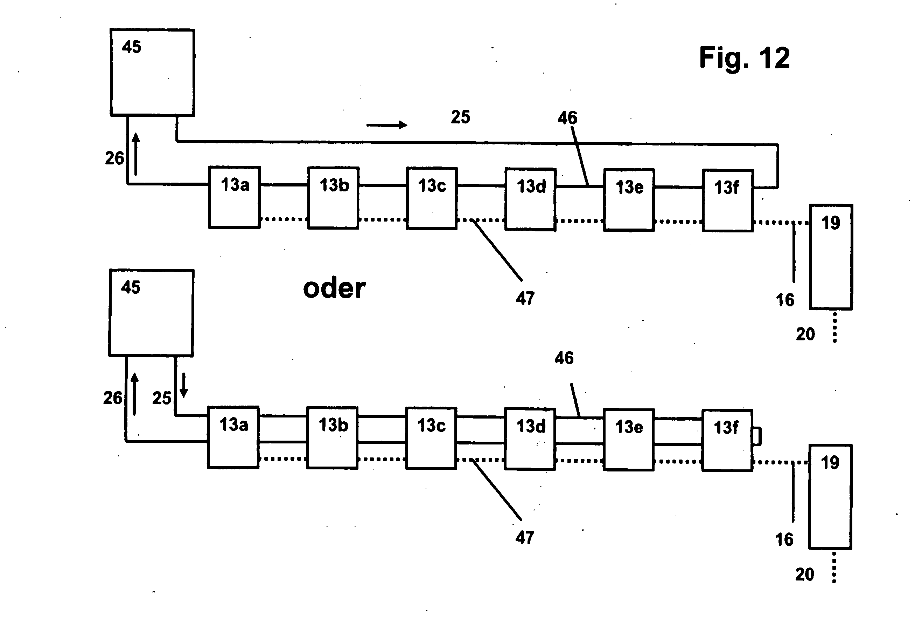

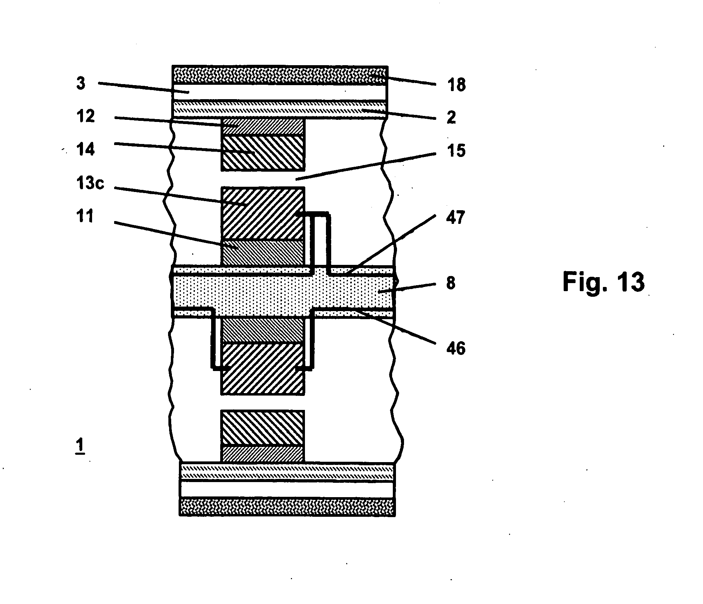

Die weitere Ausführung entspricht der ersten Ausführungsform. Im Ausführungsbeispiel gemäß Fig. 10 sind vier symmetrisch angeordnete, jeweils von der Mantelfläche zugängliche Nuten 42 gezeigt. Selbstverständlich können auch mehr oder auch weniger als vier Nuten vorgesehen sein. Es ist alternativ möglich, in einer Nut 42
● nur die Wicklungsanschlüsse 27 und/oder die elektrischen Verbindungsleitungen 47 (siehe Fig. 12 und 13) oder
● nur die Kühlmittelzuleitungen 28 oder
● nur die Kühlmittelableitungen 29 oder
● Kühlmittelzuleitungen 28 und Kühlmittelableitungen 29 oder
● nur Kühlmittel-Verbindungsleitungen 46 (siehe Fig. 12 und 13) oder
● Kühlmittelzuleitungen 28 und Kühlmittelableitung 29 respektive Kühlmittel-Verbindungsleitungen 46 und Wicklungsanschlüsse 27 respektive elektrischen Verbindungsleitungen 47
zu führen.

Die Fig. 12 und 13 zeigen ein zweites mögliches Schema der elektrischen Anschlusstechnik sowie der Kühlmittel-Anschlusstechnik für die siebte Ausführungsform. Während in Fig. 11 eine konsequente Parallelschaltung von Kühlmittelleitungen und auch elektrischen Leitungen zu den einzelnen Wicklungen realisiert ist, wird in Fig. 12 eine Reihenschaltung der Kühlmittelleitungen umgesetzt. Jeweils zwischen zwei Wicklungen ist eine Kühlmittel-Verbindungsleitung 46 und eine elektrische Verbindungsleitung 47 vorgesehen, wobei diese Leitungen in Nuten 42 verlaufen.

Fig. 12 zeigt zwei mögliche Kühlkreislauf-Varianten. Bei der im oberen Bildbereich gezeigten ersten Variante ergibt sich folgender Kühlmittelkreisfauf: Rückkühler 45 - Kühfmittelzuleitung 25 (kann ebenfalls in einer Nut 42 verlaufen) - Wicklung 13f - Kühlmittel-Verbindungsleitung 46 - Wicklung 13e - Kühlmittel-Verbindungsleitung 46 - Wicklung 13d - Kühlmittel-Verbindungsleitung 46 - Wicklung 13c - Kühlmittel-Verbindungsleitung 46 - Wicklung 13b - Kühlmittel-Verbindungsleitung 46 - Wicklung 13a - Kühlmittelableitung 26 - Rückkühler 45.

Bei der im unteren Bildbereich gezeigten zweiten Variante ergibt sich folgender Kühlmittelkreislauf: Rückkühler 45 - Kühlmittelzuleitung 25 - Wicklung 13a - Kühlmittel-Verbindungsleitung 46 - Wicklung 13b - Kühlmittel-Verbindungsleitung 46 - Wicklung 13c - Kühlmittel-Verbindungsleitung 46 - Wicklung 13d - Kühlmittel-Verbindungsleitung 46 - Wicklung 13e - Kühlmittel-Verbindungsleitung 46 - Wicklung 13f - Kühlmittel-Verbindungsleitung 46 - Wicklung 13e - Kühlmittel-Verbindungsleitung 46 - Wicklung 13d - Kühlmittel-Verbindungsleitung 46 - Wicklung 13c - Kühlmittel-Verbindungsleitung 46 - Wicklung 13b - Kühlmittel-Verbindungsleitung 46 - Wicklung 13a - Kühlmittelableitung 26 - Rückkühler 45.

### Bezugszeichenliste:

- 1: Antriebstrommel eines Gurtbandförderers
- 2: Trommelmantel
- 3: Trommelbelag
- 4: stirnseitiger Boden
- 5: Lager
- 6: stirnseitiger Boden
- 7: Lager
- 8: Trommelachse
- 9: Achsbefestigung
- 10: Achsbefestigung
- 11: achsseitiger Motorrahmen
- 12: mantelseitiger Motorrahmen
- 13: 13a - 13f Wicklung
- 14: Permanentmagnete
- 15: Luftspalt
- 16: Anschlussleitung
- 17: Trommelmantel
- 18: Fördergurt
- 19: Umrichter
- 20: Energieversorgung
- 21: Antriebstrommel
- 22: Antriebstrommel
- 23: Trommelachse
- 24: Antriebstrommel
- 25: Kühlmittelzuleitung
- 26: Kühlmittelableitung
- 27 27a - 27f: Wicklungsanschluss
- 28 28a - 28f: Wicklungs-Kühlmittelzuleitung
- 29 29a - 29f: Wicklungs-Kühlmittelableitung
- 30: Antriebstrommel
- 31: Trommelmantel
- 32: Trommelbelag
- 33: stirnseitiger Boden
- 34: stirnseitiger Boden
- 35: achsseitiger Motorrahmen
- 36: mantelseitiger Motorrahmen
- 37: Wicklung
- 38: Permanentmagnete
- 39: Luftspalt
- 40: Rohrleitung
- 41: Antriebstrommel
- 42: Nuten
- 43: Kühlmittelverteiler
- 44: Kühlmittelsammler
- 45: Rückkühler
- 46: Kühlmittel-Verbindungsleitung
- 47: elektrische Verbindungsleitung

- A: Motor (Synchronmotor mit Permanenterregung) mit Kühlvorrichtung
- B: Motor (Synchronmotor mit Permanenterregung) ohne Kühlvorrichtung
- C: Motor (Synchronmotor mit Permanenterregung) mit Kühlvorrichtung

## Patentansprüche

1. Antriebstrommel (1, 21, 22, 24, 30, 41) eines Gurtbandförderers für den getriebelosen Antrieb eines Fördergurts (18),
- wobei innerhalb des Trommelmantels (2, 17, 31) mehrere, jeweils gleichartig ausgeführte Motoren (A, C) angeordnet sind, welche über einen mantelseitigen Motorrahmen (12, 36) am Trommelmantel (2,17, 31) und über einen feststehenden achsseitigen Motorrahmen (11, 35) an einer feststehenden Trommelachse (8, 23) befestigt sind,
- wobei der Trommelmantel (2, 17, 31) beidseitig mittels eines stirnseitigen Bodens (4, 6, 33, 34) verschlossen ist, wobei die Böden (4, 6, 33, 34) mit zentrisch angeordneten, zur Aufnahme der feststehenden Trommelachse (8, 23) dienenden Lagern (5, 7) versehen sind,
- wobei die beiden Enden der feststehenden Trommelachse (8, 23) an Achsbefestigungen (9, 10) montiert sind,
- wobei mindestens eine an der Trommelachse (8, 23) geführte elektrische Anschlussleitung (16, 27, 47) zwischen einer am feststehenden achsseitigen Motorrahmen (11, 35) befestigten Wicklung (13, 37) der Motoren (A, C) und einer elektrischen Energieversorgung verläuft,
- wobei die Motoren (A, C) eine Kühlvorrichtung für die Wicklung (13, 37) aufweisen,
- wobei eine Kühlmittelzuleitung (25, 28) und eine Kühlmittelableitung (26, 29) der Kühlvorrichtung und/oder eine Kühlmittel-Verbindungsleitung (46) an der Trommelachse (8, 23) geführt sind,
- wobei zur Führung von elektrischer Anschlussleitung (16, 27) und/oder elektrischer Verbindungsleitung (47) und/oder Kühlmittelzuleitung (25, 28) und/oder Kühlmittelableitung (26, 29) und/oder Kühlmittel-Verbindungsleitung (46) von der Mantelfläche zugängliche Längsnuten (42) an der massiv ausgebildeten Trommelachse (8, 23) vorgesehen sind.

2. Antriebstrommel nach Anspruch 1, **dadurch gekennzeichnet, dass** für jeden Motor eine separate elektrische Anschlussleitung (16, 27) an der Trommelachse geführt ist.

3. Antriebstrommel nach Anspruch 1 oder 2, **dadurch gekennzeichnet, dass** für jeden Motor eine separate Kühlmittelzuleitung (25, 28) an der Trommelachse geführt ist.

4. Antriebstrommel nach einem der vorstehenden Ansprüche, **dadurch gekennzeichnet, dass** für jeden Motor eine separate Kühlmittelableitung (26, 29) an der Trommelachse geführt ist.

5. Antriebstrommel nach Anspruch 1, **dadurch gekennzeichnet, dass** jeweils zwischen zwei Motoren eine Kühlmittel-Verbindungsleitung (46) an der Trommelachse geführt ist.

6. Antriebstrommel nach Anspruch 1, **dadurch gekennzeichnet, dass** jeweils zwischen zwei Motoren eine elektrische Verbindungsleitung (47) an der Trommelachse geführt ist.

7. Antriebstrommel nach einem der vorstehenden Ansprüche, **dadurch gekennzeichnet, dass** die Motoren (A, C) als Synchronmotoren mit Permanenterregung ausgebildet sind, wobei die Permanentmagnete (14, 38) am mantelseitigen Motorrahmen (12, 36) befestigt sind.

8. Antriebstrommel nach einem der vorstehenden Ansprüche, **dadurch gekennzeichnet, dass** die Befestigung der Motoren (A, C) zwischen den Motorrahmen (11, 35, 12, 36) und der Trommelachse (8, 23) respektive des Trommelmantels (2, 17, 31) über formschlüssige Verbindungen, wie Passfedern oder Verzahnungen, erfolgt, wobei vorzugsweise seitliche Arretierungen gegen seitliches Verrutschen vorgesehen sind.

9. Antriebstrommel nach einem der vorstehenden Ansprüche, **dadurch gekennzeichnet, dass** der Trommelmantel (2, 17, 31) mit einem Trommelbelag (3) beschichtet ist.

10. Antriebstrommel nach einem der vorstehenden Ansprüche, **dadurch gekennzeichnet, dass** die elektrische Energieversorgung der Motoren (A, C) über einen Umrichter (19), vorzugsweise Frequenzumrichter, erfolgt.

## Claims

1. Drive drum (1, 21, 22, 24, 30, 41) for a belt conveyor for gearlessly driving a conveyor belt (18),
- a plurality of in each case identically configured motors (A, C) being arranged within the drum casing (2, 17, 31), which motors are fastened on the drum casing (2, 17, 31) via a casing-side motor frame (12, 36) and are fastened on a fixed drum spindle (8, 23) via a fixed spindle-side motor frame (11, 35),
- the drum casing (2, 17, 31) being sealed at both ends by means of an end-side base (4, 6, 33, 34), the bases (4, 6, 33, 34) being provided with centrally arranged bearings (5, 7) which are used for accommodating the fixed drum spindle (8, 23),
- the two ends of the fixed base spindle (8, 23) being fitted using spindle fastenings (9, 10),
- at least one electrical connecting line (16, 27, 47), which is routed on the drum spindle (8, 23), running between a winding (13, 37), which is fastened on the fixed spindle-side motor frame (11, 35), of the motors (A, C) and an electrical power supply,
- the motors (A, C) having a cooling apparatus for the winding (13, 37),
- a coolant feedline (25, 28) and a coolant discharge line (26, 29) of the cooling apparatus and/or a coolant connecting line (46) being routed on the drum spindle (8, 23),
- in order to guide the electrical connecting line (16, 27) and/or the electrical connecting line (47) and/or the coolant feedline (25, 28) and/or the coolant discharge line (26, 29) and/or the coolant connecting line (46), longitudinal grooves (42) which are accessible from the casing surface being provided on the drum spindle (8, 23) which is designed to be solid.

2. Drive drum according to Claim 1, **characterized in that** for each motor a separate electrical connecting line (16, 27) is routed on the drum spindle.

3. Drive drum according to Claim 1 or 2, **characterized in that** for each motor a separate coolant feedline (25, 28) is routed on the drum spindle.

4. Drive drum according to one of the preceding claims, **characterized in that** for each motor a separate coolant discharge line (26, 29) is routed on the drum spindle.

5. Drive drum according to Claim 1, **characterized in that** in each case between two motors a coolant connecting line (46) is routed on the drum spindle.

6. Drive drum according to Claim 1, **characterized in that** in each case between two motors an electrical connecting line (47) is routed on the drum spindle.

7. Drive drum according to one of the preceding claims, **characterized in that** the motors (A, C) are in the form of synchronous motors with excitation using permanent magnets, the permanent magnets (14, 38) being fastened on the casing-side motor frame (12, 36).

8. Drive drum according to one of the preceding claims, **characterized in that** the fastening of the motors (A, C) takes place between the motor frames (11, 35, 12, 36) and the drum spindle (8, 23) respectively of the drum casing (2, 17, 31) via form-fitting connections, such as feather keys or toothed formations, lateral stops preferably being provided to prevent lateral sliding.

9. Drive drum according to one of the preceding claims, **characterized in that** the drum casing (2, 17, 31) is coated with a drum covering (3).

10. Drive drum according to one of the preceding claims, **characterized in that** the electrical power supply of the motors (A, C) takes place via a converter (19), preferably a frequency converter.

## Revendications

1. Tambour d'entraînement (1, 21, 22, 24, 30, 41) d'un transporteur à courroie pour l'entraînement sans transmission d'une courroie de transport (18),
- plusieurs moteurs (A, C) réalisés à chaque fois de manière identique étant disposés à l'intérieur de l'enveloppe du tambour (2, 17, 31), lesquels moteurs sont fixés par le biais d'un cadre de moteur (12, 36) côté enveloppe sur l'enveloppe de tambour (2, 17, 31) et par le biais d'un cadre de moteur fixe (11, 35) côté axe, à un axe de tambour fixe (8, 23),
- l'enveloppe de tambour (2, 17, 31) étant fermée des deux côtés au moyen d'un fond (4, 6, 33, 34) côté frontal, les fonds (4, 6, 33, 34) étant pourvus de paliers (5, 7) disposés centralement, servant à recevoir l'axe de tambour fixe (8, 23),
- les deux extrémités de l'axe de tambour fixe (8, 23) étant montées sur des fixations d'axe (9, 10),
- au moins une conduite de raccordement électrique (16, 27, 47) guidée sur l'axe de tambour (8, 23) s'étendant entre un enroulement (13, 37) des moteurs (A, C) fixé au cadre de moteur fixe (11, 35) côté axe et une alimentation en puissance électrique,
- les moteurs (A, C) présentant un dispositif de refroidissement pour l'enroulement (13, 37),
- une conduite d'amenée de réfrigérant (25, 28) et une conduite d'évacuation de réfrigérant (26, 29) du dispositif de refroidissement et/ou une conduite de connexion de réfrigérant (46) étant guidées sur l'axe de tambour (8, 23),
- des rainures longitudinales (42) accessibles depuis la surface d'enveloppe étant prévues sur l'axe de tambour (8, 23) réalisé sous forme massive pour le guidage de la conduite de raccordement électrique (16, 27) et/ou de la conduite de connexion électrique (47) et/ou de la conduite d'amenée de réfrigérant (25, 28) et/ou de la conduite d'évacuation de réfrigérant (26, 29) et/ou de la conduite de connexion de réfrigérant (46).

2. Tambour d'entraînement selon la revendication 1, **caractérisé en ce que** pour chaque moteur, une conduite de raccordement électrique séparée (16, 27) est guidée sur l'axe de tambour.

3. Tambour d'entraînement selon la revendication 1 ou 2, **caractérisé en ce que** pour chaque moteur une conduite d'amenée de réfrigérant séparée (25, 28) est guidée sur l'axe de tambour.

4. Tambour d'entraînement selon l'une quelconque des revendications précédentes, **caractérisé en ce que** pour chaque moteur une conduite d'évacuation de réfrigérant séparée (26, 29) est guidée sur l'axe de tambour.

5. Tambour d'entraînement selon la revendication 1, **caractérisé en ce qu'**entre deux moteurs une conduite de connexion de réfrigérant (46) est à chaque fois guidée sur l'axe de tambour.

6. Tambour d'entraînement selon la revendication 1, **caractérisé en ce qu'**entre deux moteurs une conduite de connexion électrique (47) est à chaque fois guidée sur l'axe de tambour.

7. Tambour d'entraînement selon l'une quelconque des revendications précédentes, **caractérisé en ce que** les moteurs (A, C) sont réalisés sous forme de moteurs synchrones avec une excitation à aimant permanent, les aimants permanents (14, 38) étant fixés sur le cadre de moteur (12, 36) côté enveloppe.

8. Tambour d'entraînement selon l'une quelconque des revendications précédentes, **caractérisé en ce que** la fixation des moteurs (A, C) entre les cadres de moteur (11, 35, 12, 36) et l'axe de tambour (8, 23) par rapport à l'enveloppe de tambour (2, 17, 31) a lieu par le biais de connexions par engagement par correspondance géométrique, comme des ressorts d'ajustement ou des dentures, des blocages latéraux contre un glissement latéral étant de préférence prévus.

9. Tambour d'entraînement selon l'une quelconque des revendications précédentes, **caractérisé en ce que** l'enveloppe de tambour (2, 17, 31) est revêtue d'un revêtement de tambour (3).

10. Tambour d'entraînement selon l'une quelconque des revendications précédentes, **caractérisé en ce que** l'alimentation en puissance électrique des moteurs (A, C) s'effectue par le biais d'un onduleur (19), de préférence un convertisseur de fréquences.
